(19) Europäisches Patentamt

European Patent Office

Office européen des brevets

(11) **EP 4 556 940 A1**

(12) **EUROPEAN PATENT APPLICATION**

(43) Date of publication:
21.05.2025 Bulletin 2025/21

(21) Application number: 24211373.6

(22) Date of filing: 07.11.2024

(51) International Patent Classification (IPC):
*G01S 7/03* (2006.01)          *G01S 7/40* (2006.01)
*G01S 13/931* (2020.01)

(52) Cooperative Patent Classification (CPC):
**G01S 7/038; G01S 7/4021; G01S 13/931;**
G01S 7/4013; G01S 2013/93275

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.11.2023   US 202318509419**

(71) Applicant: **NXP B.V.**
**5656 AG Eindhoven (NL)**

(72) Inventors:
• **Pandharipande, Ashish**
**5656AG Eindhoven (NL)**
• **Rosenmuller, Daan**
**5656AG Eindhoven (NL)**
• **Overdevest, Jeroen**
**5656AG Eindhoven (NL)**
• **Filippi, Alessio**
**5656AG Eindhoven (NL)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(54) **SELF-INTERFERENCE REDUCTION FOR RADAR SYSTEMS**

(57)     A radar system includes a first transmitter channel and a first receiver channel. In a first mode of operation the radar system determines a first channel response. In a second mode of operation, the radar system modifies a received signal based on the first channel response.

**FIG. 1**

**Description**

BACKGROUND

Radar systems are used in a variety of devices to detect and identify objects and determine information about the objects such as their range, velocity, direction, or material. For example, some automobiles rely on radar to detect information about nearby objects, and thereby support autonomous driving or other driver assistance functions. To detect information about the nearby objects, a radar system typically transmits a sensing signal via one or more transmitters, receives one or more reflected signals (that is, signals generated by reflections of the sensing signal at the nearby objects) at one or more receivers, and analyzes the received signals to determine the range, velocity and other information about the objects. In some cases, a radar system can be impacted by self-interference, wherein the close proximity of a radar system and receiver, or the presence of objects in very close proximity to the transmitter, results in a leakage signal from the transmitter to the receiver interfering with the reception and analysis of the reflected signals. This self-interference can cause, for example, the misidentification or misdetection of objects in the proximity of the radar system.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram of a radar system that reduces the impact of a self-interference signal based on an estimated channel response of the system in accordance with some embodiments.

FIG. 2 is a block diagram illustrating an example of the radar system of FIG. 1 determining the estimated channel response based on transmitting a test signal in a first mode of operation in accordance with some embodiments.

FIG. 3 is a block diagram illustrating an example of the radar system of FIG. 1 generating a self-interference correction signal based on the estimated channel response in accordance with some embodiments.

FIG. 4 is a block diagram illustrating an example of the radar system of FIG. 1 employing the self-interference correction signal of FIG. 3 to adjust a received signal in a sensing mode of operation in accordance with some embodiments.

FIG. 5 is a flow diagram of a method of reducing the impact of a self-interference signal on the sensing of objects at a radar system in accordance with some embodiments.

DETAILED DESCRIPTION

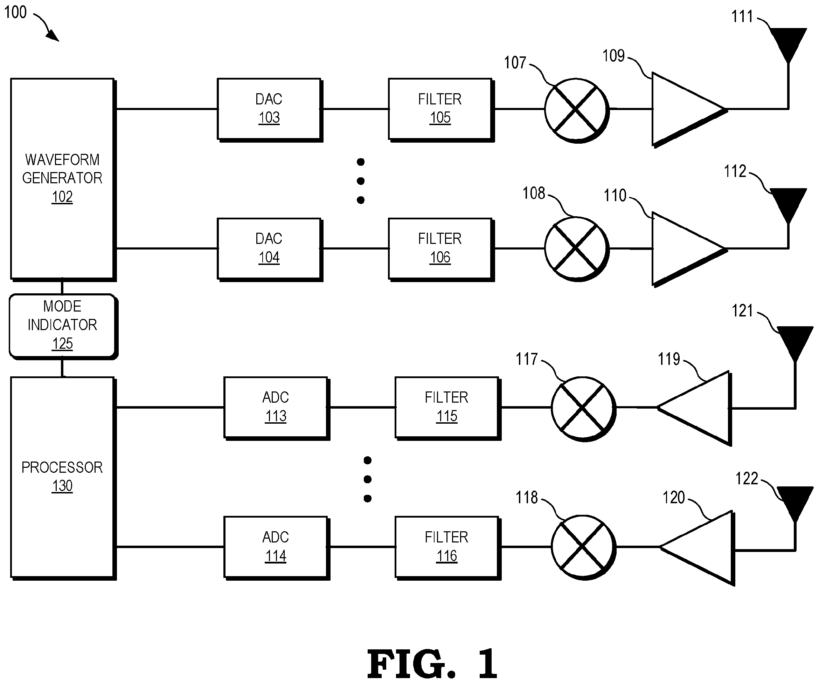

FIGs. 1-5 illustrate techniques for reducing the impact of self-interference at a radar system based on one or more estimated channel responses at the radar system. The radar system operates in two modes: a calibration mode and a sensing mode. In the calibration mode, the radar system sends a set of test signals via a set of transmitters and receives responsive signals at a corresponding set of receivers. Based on the responsive signals, the radar system estimates the channel responses. In a sensing mode of operation, the radar system sends a sensing signal, and in response receives a set of signals at the receivers. The radar system employs the estimated channel responses to reduce the components of the received signals that are due to self-interference. The radar system thereby reduces the impact of self-interference on system performance, including reducing the number of false detections (e.g., the number of detected "ghost" images) and increasing the likelihood of correctly detecting objects.

To further illustrate via an example, in some embodiments a radar system includes a transmitter and a receiver, wherein the transmitter and the receiver channel form a channel of the radar system. In the calibration mode of operation, the radar system transmits test signal based on a specified digital sequence. In at least some embodiments, the test signal is transmitted at a relatively low power level to avoid interference of objects and to avoid the potential of non-linear behavior of the receivers in the presence of a strong signal in the calibration of the system. In response to transmitting the test signal, the radar system receives a test response signal at the receiver. Based on the test response signal, the radar system determines a set of self-interference channel coefficients, wherein these coefficients indicate the channel response resulting from self-interference. Based on the self-interference channel coefficients, the radar system generates a self-interference signal, and feeds the signal into a receive path of the radar system in the sensing mode, so that the self-interference signal is canceled from the received signals received in the sensing mode. This configuration reduces the component of the received signal that results from self-interference, thereby improving the performance of the radar system.

FIG. 1 illustrates a radar system 100 in accordance with some embodiments. As described further below, the radar system 100 is generally configured to detect objects within proximity of a device that includes the radar system 100 and, at least in some embodiments, is configured to determine characteristics of the detected objects, such as position information (e.g., directional information, range information), radial velocity information, and the like. For purposes of description, it is assumed that the radar system 100 is employed as a component of an automobile (e.g., to support an autonomous driving system), but it will be appreciated that in other embodiments the radar system is employed as a component of any device that employs radar to detect objects.

To support the detection of objects, the radar system 100 employs a waveform generator 102, a set of transmitter and receiver channels (described in more detail below), and a processor 130. In some embodiments, the waveform generator 102 is a digital waveform generator including a set of circuits configured to generate specified sequences of digital values that collectively form digital signals for conversion to an analog signal and subsequent transmission, as described further below. The specified sequences depend on the type of radar waveform implemented by the radar system 100. For the purposes of description of the example of FIG. 1, it is assumed that the waveform generator 102 generates digitally modulated waveforms, and in particular phase modulated continuous wave (PMCW) waveforms. In other embodiments, the radar system 100 is an orthogonal frequency division multiplexing (OFDM) system, and the waveform generator 102 generates OFDM sequences. In still other embodiments, the radar system 100 is a digitized frequency modulated continuous wave (FMCW) system and the waveform generator 102 generates FMCW sequences. In still other embodiments, the radar system 100 is a frequency modulated continuous wave (FMCW) system whose frequency is modulated in phase (PM-FMCW radar). In yet other embodiments the radar system 100 is an orthogonal time frequency space (OTFS) modulation radar system.

The radar system 100 includes a set of N transmitter channels and a corresponding set of M receiver channels, where N and M are integers. In some embodiments, M and N are different (that is, the radar system 100 includes a different number of transmitter channels and receiver channels). For ease of illustration, FIG. 1 depicts two transmitter channels and two receiver channels. Each transmitter channel includes a digital-to-analog converter (DAC) (e.g., DACs 103 and 104) a filter () (e.g., filters 105 and 106), a quadrature mixer (e.g., quadrature mixers 107 and 108), an amplifier (e.g., amplifiers 109 and 110) and a transmit antenna (e.g., transmit antennae 111 and 112).

The DAC of a transmitter channel is a set of circuits configured to receive a digital waveform generated by the waveform generator 102 and to convert the sequence of digital values to an analog signal having characteristics (e.g., amplitude and frequency) governed by the sequence of digital values. The filter of a transmitter channel is a set of circuits configured to filter the analog signal generated by the corresponding DAC to filter out signal components, thereby shaping the frequency spectrum of the analog signal to be within a corresponding frequency range.

The quadrature mixer of a transmitter channel is a set of circuits configured to modulate the signal provided by the corresponding filter to a specified carrier frequency $f_c$. The power amplifier of a transmitter channel is a set of circuits configured to amplify the modulated signal provided by the corresponding quadrature mixer. In at least some embodiments, the amplifier of a transmitter channel is programmable or modifiable to generate output signals at different power levels. The transmit antenna of a transmitter channel is a transducer that converts the amplified signal generated by the corresponding amplifier to an electromagnetic radar signal and transmits the radar signal over a corresponding medium (e.g., the air). After being transmitted by the transmit antenna, the transmitted radar signal propagates in the environment of the radar system 100 environment and reflects off of one or more nearby objects to generate a reflected signal.

Each receiver channel includes a receive antenna (e.g., receive antennae 121 and 122), a low-noise amplifier (e.g., amplifiers 119 and 120), a quadrature mixer (e.g., quadrature mixers 117 and 118), a filter (e.g., filters 115 and 116) and an analog-to-digital converter (ADC) (e.g., ADCs 113 and 114). In some embodiments, each receiver channel includes two ADCs in order to sample a complex signal. Furthermore, in some embodiments the receiver channels include other mixers (e.g., non-quadrature mixers). The receive antenna of a receiver channel is a transducer that converts a received reflected signal to an electrical signal. In some embodiments, the receiver includes a plurality of receive antennas to support direction of arrival (DoA) calculations of the received reflection of the radar signal.

The amplifier 119 of a receiver channel is a set of circuits configured to amplify the signal provided by the corresponding receive antenna. The quadrature mixer of a receiver channel is a set of circuits configured to demodulate the signal generated by the corresponding amplifier. In some embodiments, each quadrature mixer of a receiver channel demodulates the received signal with analogous quadrature signals as those applied at the quadrature mixer of the corresponding transmitter channel to generate the analog components of the received signal. The ADC of a receiver channel is a set of circuits configured to convert the analog components of the signal generated by the corresponding quadrature mixer, thereby generating a digital signal representative of the reflected radar signal.

In some embodiments, the processor 130 is a processor device, such as a central processing unit (CPU) configured to execute instructions (e.g., applications) to carry out the operations described further herein. In other embodiments, the processor 130 represents dedicated circuitry designed and configured to perform the operations described further herein. For example, in different embodiments the processor 130 represents a hardcoded circuit (e.g., a corresponding portion of an application specific integrated circuit (ASIC) or a set of logic gates, storage elements, and other components selected and arranged to execute the ascribed operations), a programmable circuit (e.g., a corresponding portion of a field programmable gate array (FPGA) or programmable logic device (PLD)) that performs the operations described further herein. Examples of the operations executed by the processor 130 includes determining, based on the reflected radar signals received via the receiver channels, characteristics of one or more objects in proximity of the radar system 100, such as object velocity, object range, object direction, and the like.

As noted above, in at least some cases a radar system can experience self-interference, whereby the signal transmitted by a transmit antenna is directly coupled to a receive antenna. Self-interference can also result from the presence of an object (e.g., an automobile bumper) in close proximity to the radar system. This self-interference can, in effect, "blind" the radar and lead to missed detections of objects. To address self-interference, the radar system 100 is configured to operate in two different modes, referred to as a calibration mode and a sensing mode. In the calibration mode, each of the transmitter channels of the radar system 100 transmits a low-power digital sequence that covers a specified region of interest. Based on the signals received at the receiver channels, the processor 130 determines a channel response between each pair of transmit and receive antennae. For example, the processor 130 determines a channel response between the transmit antenna 111 and the receive antenna 121.

The channel response for a channel indicates the characteristics (e.g., signal characteristics such as frequency and amplitude) and behavior of the channel resulting from the transmission of the test signal, and without any reflected signals from objects that are to be detected in the sensing mode. In other words, the channel response indicates the characteristics and behavior of the channel due to self-interference. Based on the channel response, the processor 130 estimates the characteristics (e.g., the signal coefficients) of a cancellation signal. In the sensing mode, the processor 130 uses these channel response characteristics to generate the cancellation signal, and then employs the cancellation signal to reduce the effects of self-interference in a received signal.

To illustrate, in the sensing mode, each of the transmitter channels of the radar system 100 transmits relatively high-power signals based on a digital sequence to cover a specified region of interest. In some embodiments, the digital sequences in the sensing mode are the same as the sequences in the calibration mode but are transmitted by the radar system 100 at a higher power in the sensing mode. The transmitted signals reflect off of an object in the region of interest, and the reflected signals are received at the receiver channels of the radar system 100. For each channel, the radar system 100 combines the received reflected signal with the corresponding cancellation signal, such as by subtracting the cancellation signal from the received signal. The processor 130 uses the resulting signal to perform radar operations, such as object detection and analysis (e.g., object distance, direction, and velocity). Because the cancellation signal represents the channel response resulting from self-interference, combining the cancellation signal with the received signal in this way reduces the impact of self-interference on object detection and analysis, and thus improves the performance of the radar system 100.

To control the mode of operation, the radar system 100 includes a mode indicator 125. In some embodiments, the mode indicator 125 is a programmable value stored in a register, a flag, or other storage element. Under specified conditions, the processor 130 programs the stored value to set the mode of the radar system 100 to either the calibration mode or the sensing mode. For example, in some embodiments the processor 130 places the radar system 100 in the calibration mode during a system initialization process, and then estimates the channel response and cancellation signal characteristics (e.g., signal coefficients) for each of the channels of the radar system 100 as described herein. The processor 130 then sets the mode indicator 125 to the sensing mode, and commands each of the transmitter channels to issue received signals. The processor 130 then uses the cancellation signals for each channel to reduce the effects of self-interference on the signals received at each receiver channel. In some embodiments, the radar system 100 re-enters the calibration mode, and re-estimates the channel responses and cancellation signals, on a periodic basis, and thereby adapts the estimated channel responses and cancellation signals to changing system conditions.

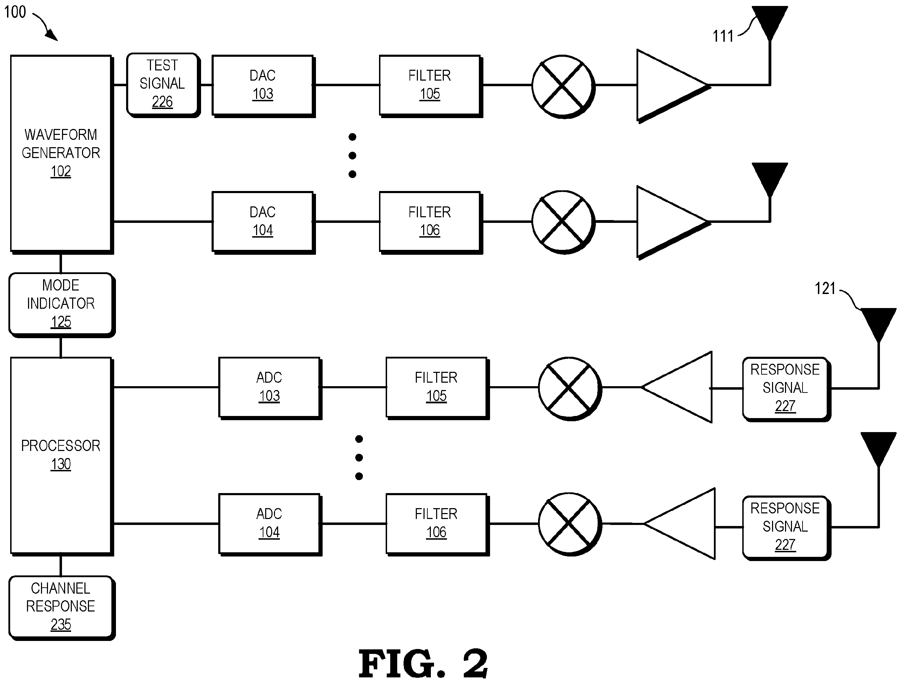

FIG. 2 illustrates an example of the radar system 100 estimating a channel response in the calibration mode in accordance with some embodiments. In the depicted example, the waveform generator issues a test signal 226 (that is, a specified sequence of test values) at a relatively low power. The power level of the test signal 226 can be set in different ways in different embodiments. For example, in some embodiments the test signal 226 is set to a low power level by the radar system 100 setting a gain of the transmit amplifiers (e.g., the power amplifiers (PAs) 109 and 110) to a relatively low gain setting. In other embodiments, the test signal 226 is set to a low power level by the radar system 100 setting an intermediate frequency (IF) gain for the system or the gain of the PAs 109 and 110 to a low power level. In still other embodiments, the test signal 226 is set to a low power level by setting the gain of other RF subsystems of the radar system 100. In still other embodiments, a combination of these techniques is used.

The test signal 226 is converted by the transmitter channel to an analog signal, processed, and transmitted by the transmit antenna 111. In response, the receive antenna 121 receives a response signal 227. Because the test signal 226 was transmitted at a low power level, the response signal 227 represents the effects of self-interference at the corresponding channel of the radar system 100. The response signal is processed and converted to a digital signal, and the processor 130 analyzes the digital signal to determine an estimated channel response 235. Based on the channel response 235, the processor 130 determines the characteristics (e.g., signal coefficients) of a self-cancellation signal that, when combined with a received signal in the sensing mode, reduces the impact of self-interference on the analysis of the received signal.

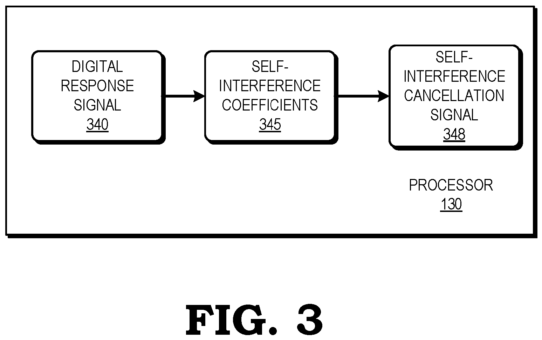

An example of the processor 130 generating a self-interference cancellation signal is illustrated at FIG. 3 in accordance with some embodiments. In the depicted example, the processor 130 accesses a digital response signal 340, representing a digitized version of a response signal (e.g., response signal 227 of FIG. 2) received by a channel in the calibration mode. Based on the digital response signal 340, the processor 130 determines a set of self-interference coefficients 345, representing the channel response 235 for the channel due to self-interference.

For example, for a sufficiently small transmit power level of the test signal 226, the received reflections are due to the spillover of the signal from the transmit antenna to the corresponding receive antenna. That is, because the power level of the test signal 226 is relatively low, distant environmental objects do not impact the response signal, as the signal components due to these environmental objects are below the noise floor. Accordingly, in the calibration mode the received signal at element $m$ can be expressed as

$$y_m^L = \sum_n h_{mn}^{SI} * x_n + w_m,$$

where $y_m^L$ is the received signal in the calibration mode, $h_{mn}^{SI}$ are the self-interference channel coefficients between the m-th receiver channel element and the n-th transmitter element, and $w_m$ is the receiver channel thermal noise component.

In some embodiments, to estimate the self-interference channel coefficients $h_{mn}^{SI}$ and thus to generate the self-interference coefficients 345, the processor 130 performs a cyclic correlation for each receiver channel between the test signal (that is, between the digital symbols of the test signal transmitted in the calibration mode) and the response signal (that is, the symbols of the digital response signal, such as digital response signal 340). For example, in some embodiments the cyclic correlation performed by the processor 130 for the receiver channel chain m with the n-th transmitted sequence $x_n$, can be expressed as

$$z_{mn}[k] = corr(y_m^L, x_n) = \sum_n h_{mn}^{SI}[k].\rho_{mn}^x + corr(w_m^L, x_n).$$

The sequences of symbols for each test signal are selected to have good properties on the correlation $\rho_{mn}^x$, such that the digital response signal is used to extract the self-interference channel coefficients $h_{mn}^{SI}[k]$. For example, in some embodiments the waveform generator 102 generates PMCW signals, and the processor 130 determines the self-interference coefficients 345 for each channel by performing correlation for PMCW sequences with good periodic autocorrelation properties, such as APAS, ZCZ, and M-sequences. In some embodiments, the processor 130 performs a cyclic correlation expressed as:

$$z_{mn} = y_m^L \circledast x_n,$$

In some embodiments, the processor 130 performs this calculation in the frequency domain according to the following expression:

$$z_{mn} = \mathcal{F}^{-1}\{ (\mathcal{F}\{y_m^L\})^* \cdot \mathcal{F}\{x_n\}\}.$$

In other embodiments, the radar system 100 is an OFDM radar and the range profile is retrieved from a spectral division with the transmitted OFDM sequence, followed by an inverse discrete Fourier transform. In other embodiments, the radar system 100 is an FMCW radar, and the range profile is retrieved using Fast Fourier Transforms (FFTs).

Based on the self-interference coefficients 345, the processor 130 generates the self-cancellation signal 348. For example, in some embodiments, after determining $h_{mn}^{SI}$ from $z_{mn}$, the time-domain self-interference signal for the $n^{th}$-

$m^{th}$ TX-RX pair in digital domain is generated by the processor 130 according to the following expression:

$$\boldsymbol{y}_{mn}^{SI} = \frac{1}{L_c} \, \boldsymbol{h}_{mn}^{SI} \circledast \boldsymbol{x}_n$$

where $L_c$ is the length of the digital sequence of the transmitted signal.

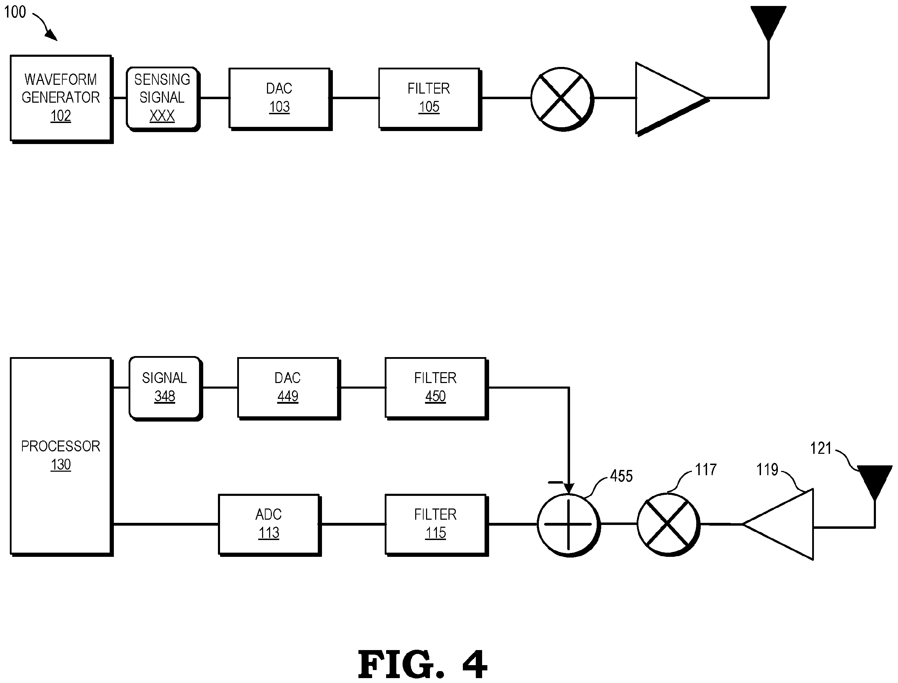

FIG. 4 illustrates an example of the radar system 100 using the self-interference cancellation signal 348 in the sensing mode to reduce the impact of self-interference on radar detection and analysis. In the depicted example, the self-interference cancellation signal is fed back along the analog path of the receiver channel to reduce the self-interference component of the received signal in baseband. While only a single receiver channel is shown for clarity, it will be appreciated that in other embodiments each of the N receiver channels of the radar system 100 is configured in a similar fashion as depicted at FIG. 4.

In the illustrated embodiment, a DAC 449, filter 450, and adder 455 form a feedback path for the self-interference cancellation signal 348. The DAC 449 is a set of circuits configured to receive the self-interference cancellation signal 348 and output an analog representation of the signal. The filter 450 is a set of circuits configured to receive and filter the analog self-interference cancellation signal based on a specified frequency band and provide the filtered self-interference cancellation signal. The adder 455 is a set of circuits including an input connected to the output of the filter 450, an input connected to the output of the quadrature mixer 117, and an output. The adder 455 is configured to subtract the components of the filtered self-interference cancellation signal from the signal provided by the quadrature mixer 117 and provide the resulting signal to the filter 115. Thus, the self-interference cancellation signal is applied to received reflection signals in the sensing mode, thereby reducing the likelihood that the ADC 113 is overloaded by self-interference effects.

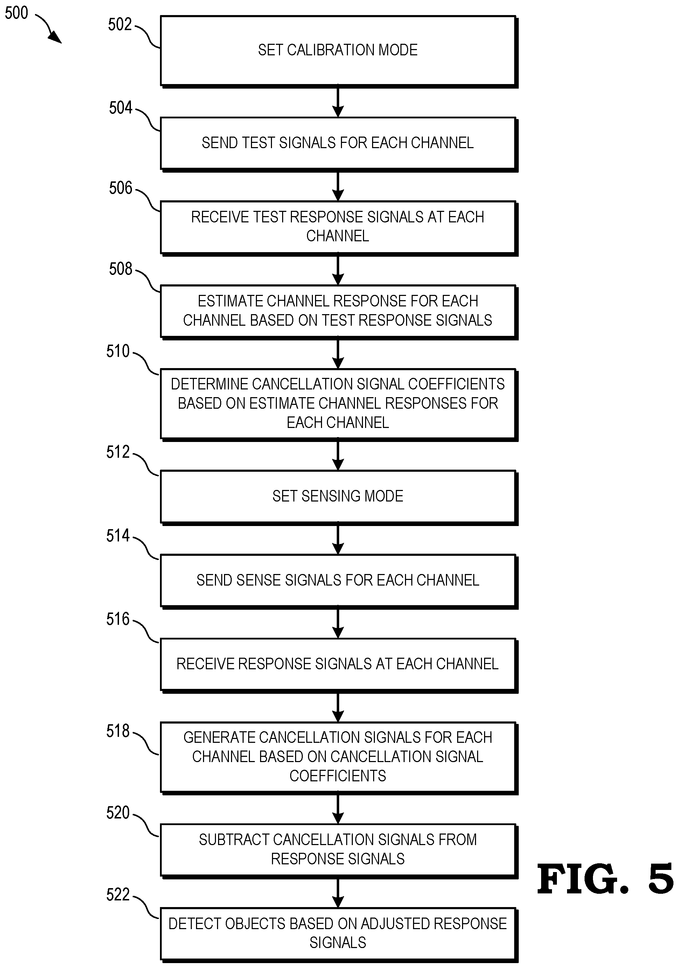

FIG. 5 illustrates a flow diagram of a method 500 of reducing the impact of self-interference on detection of objects at a radar system in accordance with some embodiments. For purposes of description, the method 500 is described with respect to an example implementation at the radar system 100 of FIG. 1, but in other embodiments the method 500 is implemented at other radar systems having a different configuration. The method 500 begins at block 502 and the processor 130 sets the mode indicator 125 to the calibration mode. For example, during a boot process or other initialization process, the processor 130 (or other component of the radar system 100) stores a value at the mode indicator 125 to indicate the calibration mode.

At block 504, in response to the radar system 100 entering the calibration mode, each transmitter channel sends a test signal, based upon a corresponding digital sequence generated by the waveform generator 102. In at least some embodiments, the digital sequence, and therefore the resulting test signal) is different for at least two of the transmitter channels (e.g., a different digital sequence and test signal for each transmit signal). Furthermore, in some embodiments the test signals are transmitted at a relatively low power level.

At block 506, in response to transmitting the test signals, each receiver channel of the radar system 100 receives a test response signal, and each receiver channel processes and digitizes the corresponding test response signal. At block 508, the processor 130 uses the digitized test response signals to estimate a channel response for each channel of the radar system 100, wherein the estimated channel response for a channel indicates the expected effects of self-interference on the corresponding channel. At block 510 the processor 130 determines, for each receiver channel and based on the corresponding estimated channel response, a set of self-interference signal coefficients. For example, in some embodiments the processor 130 determines the set of self-interference signal coefficients for a given channel by performing a cyclic correlation between the test signal and the corresponding test response signal.

At block 512 the processor 130 sets the radar system 100 to the sensing mode. For example, in response to the radar system 100 completing an initialization sequence, the processor 130 programs a value to the mode indicator 125 to indicate the sensing mode. In response to the radar system entering the sensing mode, at block 514 each transmitter channel of the radar system 100 sends a sense signal based upon a corresponding digital sequence generated by the waveform generator 102. In at least some embodiments, the digital sequence for each transmitter channel is the same as is used to generate the corresponding test signal, but each transmitter channel transmits the resulting sense signal at a higher power level as compared to the test signals. The power level of the sense signal can be set in different ways in different embodiments. For example, in some embodiments the sense signal is set to a high-power level by the radar system 100 setting a gain of the transmit amplifiers (e.g., the power amplifiers 109 and 110) to a relatively high gain setting. In other embodiments, the sense signal is set to a high-power level by the radar system 100 setting an intermediate frequency (IF) gain for the system to a high power level. In still other embodiments, the sense signal 226 is set to a high-power level by setting the gain of other RF subsystems of the radar system 100. In still other embodiments, a combination of these techniques is used.

At block 516, each receiver channel of the radar system 100 receives a response signal responsive to the corresponding sense signal. At block 518 the processor 130 generates a self-interference cancellation signal for each receiver channel based upon the corresponding self-interference cancellation signal coefficients identified at block 510. At block 520 each receiver channel adjusts the corresponding response signal by subtracting the corresponding self-interference cancellation signal from the response signal. At block 522 the processor 130 uses the adjusted response signals to detect objects in proximity to the radar system 100 and determine characteristics of the detected objects, such as velocity, direction, and the like.

A radar system includes a first transmitter channel and a first receiver channel. In a first mode of operation the radar system determines a first channel response. In a second mode of operation, the radar system modifies a received signal based on the first channel response.

Aspects of the disclosure are defined in the accompanying claims. In a first aspect, there is provided a method comprising: at a radar system including a first transmitter channel and a first receiver channel, in a first mode of operation determining a first channel response; and in a second mode of operation of the radar system, modifying a first received signal based on the first channel response.

In some embodiments, determining the first channel response comprises: transmitting a test signal; and determining the first channel response based on a signal received in response to the test signal.

In some embodiments, the method further comprises: transmitting a sense signal in the second mode of operation; and wherein the test signal is a lower power signal than the sense signal.

In some embodiments, the method further comprises: setting the test signal to a low power level in the first mode of operation by setting one or more of an amplifier setting, an intermediate frequency gain setting, and a gain setting of a radio frequency (RF) subsystem of the radar system.

In some embodiments, the first received signal comprises: generating a self-interference cancellation signal based on the first channel response; and modifying the first received signal based on the self-interference cancellation signal.

In some embodiments, reconstructing the self-interference cancellation signal comprises: determining a set of self-interference channel coefficients based on the first channel response; and reconstructing the self-interference cancellation signal based on the self-interference channel coefficients.

In some embodiments, determining the set of self-interference channel coefficients comprises: determining the set of self-interference channel coefficients based on a cyclic correlation between the test signal and the corresponding signal received in response to the test signal.

In some embodiments, modifying the first received signal comprises modifying the first received signal at an analog path of the radar system prior to converting the first received signal to a digital signal in the second mode of operation.

In a second aspect, there is provided a method, comprising: in a calibration mode of operation of a radar system, determining characteristics of a self-interference cancellation signal of the radar system; in a sensing mode of operation of the radar system, modifying a received signal based on the determined characteristics of the self-interference cancellation signal.

In some embodiments, determining characteristics of the self-interference cancellation signal comprises: transmitting a test signal in the calibration mode of operation; and determining the characteristics of the self-interference cancellation signal based on a second signal received at the radar system in response to the test signal.

In some embodiments, determining characteristics of the self-interference cancellation signal comprises: determining a set of self-interference channel coefficients based on the second signal; and reconstructing the self-interference cancellation signal based on the self-interference channel coefficients.

In some embodiments, determining the set of self-interference channel coefficients comprises: determining the set of self-interference channel coefficients based on a cyclic correlation between the test signal and the corresponding signal received in response to the test signal.

In a third aspect there is provided a radar system comprising: a first transmitter channel and a first receive channel; and a processor configured to: in a first mode of operation determine a first channel response; and in a second mode of operation of the radar system, modify a first received signal based on the first channel response.

In some embodiments, the radar system is configured to determine the first channel response by: transmitting a test signal; and determining the first channel response based on a second signal in response to transmitting the test signal.

In some embodiments, the radar system is configured to: transmit a sense signal in the second mode; and wherein the first signal is a lower power signal than the second signal.

In some embodiments, the radar system is configured to: set the test signal to a low power level in the first mode of operation by setting one or more of an amplifier setting, an intermediate frequency gain setting, and a gain setting a radio frequency subsystem of the radar system.

In some embodiments, the radar system is to modify the first received signal by: generating a self-interference cancellation signal based on the first channel response; and modifying the first received signal based on the self-interference cancellation signal.

In some embodiments, the processor is to reconstruct the self-interference cancellation signal by: determining a set of self-interference channel coefficients based on the first channel response; and reconstructing the self-interference cancellation signal based on the self-interference channel coefficients.

In some embodiments, the processor is to determine the set of self-interference channel coefficients based on a cyclic correlation between the test signal and the corresponding signal received in response to the test signal.

In some embodiments, modifying the first received signal comprises modifying the first received signal at an analog path of the radar system prior to converting the first received signal to a digital signal in the second mode.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

**Claims**

1. A method comprising:

    at a radar system including a first transmitter channel and a first receiver channel, in a first mode of operation determining a first channel response; and
    in a second mode of operation of the radar system, modifying a first received signal based on the first channel response.

2. The method of claim 1, wherein determining the first channel response comprises:

    transmitting a test signal; and
    determining the first channel response based on a signal received in response to the test signal.

3. The method of claim 2, further comprising:

   transmitting a sense signal in the second mode of operation; and
   wherein the test signal is a lower power signal than the sense signal.

4. The method of claim 2 or 3, further comprising:

   setting the test signal to a low power level in the first mode of operation by setting one or more of an amplifier setting, an intermediate frequency gain setting, and a gain setting of a radio frequency (RF) subsystem of the radar system.

5. The method of any of claims 2 to 4, wherein modifying the first received signal comprises:

   generating a self-interference cancellation signal based on the first channel response; and
   modifying the first received signal based on the self-interference cancellation signal.

6. The method of claim 5, wherein reconstructing the self-interference cancellation signal comprises:

   determining a set of self-interference channel coefficients based on the first channel response; and
   reconstructing the self-interference cancellation signal based on the self-interference channel coefficients.

7. The method of claim 6, wherein determining the set of self-interference channel coefficients comprises:
   determining the set of self-interference channel coefficients based on a cyclic correlation between the test signal and the corresponding signal received in response to the test signal.

8. The method of any preceding claim, wherein modifying the first received signal comprises modifying the first received signal at an analog path of the radar system prior to converting the first received signal to a digital signal in the second mode of operation.

9. A radar system comprising:

   a first transmitter channel and a first receive channel; and
   a processor configured to:

      in a first mode of operation determine a first channel response; and
      in a second mode of operation of the radar system, modify a first received signal based on the first channel response.

10. The radar system of claim 9, wherein the radar system is configured to determine the first channel response by:

    transmitting a test signal; and
    determining the first channel response based on a second signal in response to transmitting the test signal.

11. The radar system of claim 10, wherein the radar system is configured to:

    transmit a sense signal in the second mode; and
    wherein the first signal is a lower power signal than the second signal.

12. The radar system of claim 11:
    set the test signal to a low power level in the first mode of operation by setting one or more of an amplifier setting, an intermediate frequency gain setting, and a gain setting a radio frequency subsystem of the radar system.

13. The radar system of any of claims 10 to 12, wherein the radar system is to modify the first received signal by:

    generating a self-interference cancellation signal based on the first channel response; and
    modifying the first received signal based on the self-interference cancellation signal.

14. The radar system of claim 13, wherein the processor is to reconstruct the self-interference cancellation signal by:

determining a set of self-interference channel coefficients based on the first channel response; and reconstructing the self-interference cancellation signal based on the self-interference channel coefficients.

15. The radar system of claim 13 or 14, wherein the processor is to determine the set of self-interference channel coefficients based on a cyclic correlation between the test signal and the corresponding signal received in response to the test signal.

**FIG. 1**

**FIG. 2**

EP 4 556 940 A1

DIGITAL RESPONSE SIGNAL 340 → SELF-INTERFERENCE COEFFICIENTS 345 → SELF-INTERFERENCE CANCELLATION SIGNAL 348

PROCESSOR 130

# FIG. 3

100

| WAVEFORM GENERATOR 102 | SENSING SIGNAL XXX | DAC 103 | FILTER 105 |

| PROCESSOR 130 | SIGNAL 348 | DAC 449 | FILTER 450 |

| ADC 113 | FILTER 115 |

455

117

119

121

**FIG. 4**

FIG. 5

500

502 SET CALIBRATION MODE

504 SEND TEST SIGNALS FOR EACH CHANNEL

506 RECEIVE TEST RESPONSE SIGNALS AT EACH CHANNEL

508 ESTIMATE CHANNEL RESPONSE FOR EACH CHANNEL BASED ON TEST RESPONSE SIGNALS

510 DETERMINE CANCELLATION SIGNAL COEFFICIENTS BASED ON ESTIMATE CHANNEL RESPONSES FOR EACH CHANNEL

512 SET SENSING MODE

514 SEND SENSE SIGNALS FOR EACH CHANNEL

516 RECEIVE RESPONSE SIGNALS AT EACH CHANNEL

518 GENERATE CANCELLATION SIGNALS FOR EACH CHANNEL BASED ON CANCELLATION SIGNAL COEFFICIENTS

520 SUBTRACT CANCELLATION SIGNALS FROM RESPONSE SIGNALS

522 DETECT OBJECTS BASED ON ADJUSTED RESPONSE SIGNALS

Europäisches
Patentamt

European
Patent Office

Office européen
des brevets

# EUROPEAN SEARCH REPORT

**Application Number**

EP 24 21 1373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/309474 A1 (CHEUNG RICKY LAP KEI [US] ET AL) 25 October 2018 (2018-10-25) | 1-10, 12-15 | INV.<br>G01S7/03 |
| Y | * paragraph [0051] - paragraph [0073]; figures 3,4 * | 3,11 | G01S7/40<br>G01S13/931 |
| X | US 2021/184347 A1 (HODE JEAN-MICHEL [FR]) 17 June 2021 (2021-06-17) <br><br> * paragraph [0043] - paragraph [0074]; figures 2-5 * | 1,2,5-7, 9,10, 13-15 | |
| X | EP 0 862 747 B1 (HONEYWELL INT INC [US]) 1 October 2003 (2003-10-01) | 1-3,9-11 | |
| Y | * paragraph [0011] - paragraph [0029]; figure 1 * | 3,11 | |
| Y | SAKHNINI ADHAM ET AL: "A Codebook Approach to Spillover Cancellation in Multi-Antenna Radar and Communication Systems", 2023 IEEE 3RD INTERNATIONAL SYMPOSIUM ON JOINT COMMUNICATIONS & SENSING (JC&S), IEEE, 5 March 2023 (2023-03-05), pages 1-6, XP034335536, DOI: 10.1109/JCS57290.2023.10107508 [retrieved on 2023-04-26] | 3,11 | |
| A | * page 1, right-hand column; figure 1 * | 4,12 | **TECHNICAL FIELDS SEARCHED (IPC)**<br><br>G01S |
| A | US 9 075 144 B1 (STRAUB EDWARD M [US] ET AL) 7 July 2015 (2015-07-07) * column 7, line 12 - line 18 * | 1-15 | |
| A | US 5 861 837 A (RICHARDSON DAVID L [US] ET AL) 19 January 1999 (1999-01-19) * column 4, line 66 - column 5, line 2 * | 1-15 | |

The present search report has been drawn up for all claims

| Place of search | Date of completion of the search | Examiner |
|---|---|---|
| Munich | 20 March 2025 | Kaleve, Abraham |

EPO FORM 1503 03.82 (P04C01)

## ANNEX TO THE EUROPEAN SEARCH REPORT
## ON EUROPEAN PATENT APPLICATION NO.

EP 24 21 1373

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| US 2018309474 | A1 | 25-10-2018 | CN | 110869794 A | 06-03-2020 |
| | | | CN | 115356683 A | 18-11-2022 |
| | | | EP | 3602102 A1 | 05-02-2020 |
| | | | US | 2018309474 A1 | 25-10-2018 |
| | | | US | 2020287587 A1 | 10-09-2020 |
| | | | US | 2023008841 A1 | 12-01-2023 |
| | | | WO | 2018192582 A1 | 25-10-2018 |
| US 2021184347 | A1 | 17-06-2021 | EP | 3835811 A1 | 16-06-2021 |
| | | | ES | 2950005 T3 | 04-10-2023 |
| | | | FR | 3104859 A1 | 18-06-2021 |
| | | | US | 2021184347 A1 | 17-06-2021 |
| EP 0862747 | B1 | 01-10-2003 | AT | E251311 T1 | 15-10-2003 |
| | | | DE | 69630232 T2 | 24-06-2004 |
| | | | EP | 0862747 A1 | 09-09-1998 |
| | | | US | 5689267 A | 18-11-1997 |
| | | | WO | 9719364 A1 | 29-05-1997 |
| US 9075144 | B1 | 07-07-2015 | NONE | | |
| US 5861837 | A | 19-01-1999 | NONE | | |

EPO FORM P0459

For more details about this annex : see Official Journal of the European Patent Office, No. 12/82